# EUROPÄISCHE PATENTSCHRIFT

(11) **EP 1 077 165 B1**
(45) Veröffentlichungstag und Bekanntmachung des Hinweises auf die Patenterteilung: **03.11.2004**
(21) Anmeldenummer: 00116856.6
(22) Anmeldetag: 04.08.2000
(51) Int. Cl.: B60S 1/34, B60S 1/04

(54) **Dichtendes Lagerelement für eine Antriebswelle**
Sealing element for a drive shaft bearing
Elément étanche pour palier d'arbre d'entraînement

(30) Priorität: 18.08.1999 DE 19939054
(43) Veröffentlichungstag der Anmeldung: 21.02.2001
(73) Patentinhaber: Volkswagen Aktiengesellschaft, 38436 Wolfsburg (DE)
(72) Erfinder: Ostrowski, Wolfgang, 38446 Wolfsburg (DE)

(56) Entgegenhaltungen:
- DE-U- 1 699 567
- FR-A- 2 749 243
- GB-A- 1 042 265
- US-A- 5 320 578

## Beschreibung

Die Erfindung betrifft ein dichtendes Lagerelement für eine Antriebswelle, insbesondere für die Antriebswelle eines Scheibenwischers an einem Kraftfahrzeug.

Antriebswellen für eine Komponente außerhalb des Anordnungraumes eines Antriebsmotors mit einer Wellendurchführung nach außen und einer Gleitlagerung müssen in axialer Richtung abgedichtet werden, um zu verhindern, daß Feuchtigkeit oder Schmutz in das Gleitlager oder gar in den Anordnungsraum gelangen. Insbesondere sind die Antriebswellen eines Scheibenwischers an einem Kraftfahrzeug durch Regen, Spritzwasser und Scheibenreinigungsmittel beaufschlagt.

Aus der DE 40 28 892 C2 ist eine Antriebsvorrichtung für Scheibenwischer an Kraftfahrzeugen mit einer aus einer Stirnseite eines Lagergehäuses herausragenden Antriebswelle mit einem zylindrischen Gleitlager bekannt, das in ein Lagergehäuse eingesetzt ist und mit diesem an dessen Stirnseite einen Ringspalt ausbildet. In diesen Ringspalt ist eine Buchse aus einem elastischen Material mit einem radial nach innen vorspringenden Dichtflansch zum Eingriff in eine in der Antriebswelle angeordnete Ringnut eingesetzt. Dieser Dichtflansch bewirkt in Verbindung mit der mit diesem zusammenwirkenden Ringnut der Antriebswelle, daß ein Eindringen von Nässe in das Lagergehäuse zuverlässig verhindert wird. Der Aufbau, der Zusammenbau und insbesondere auch die Demontage der Wellenlagerung sind aufwendig, und es sind mehrere Bauteile erforderlich.

Eine Vereinfachung gegenüber dieser Lagerung stellt die in der DE 42 29 495 C1 beschriebene Lösung dar, nach der der zwischen der Antriebswelle und einem Lagergehäuse gegebene Ringspalt wenigstens abschnittsweise mit einem Kunststoffmaterial ausgespritzt ist. Bevorzugt ist die Antriebswelle und / oder die Innenfäche des Lagergehäuses mit Absätzen, Ausnehmungen oder Schultern versehen, die vom Kunststoffmaterial ausgespritzt sind. Das ausgehärtete Kunststoffmaterial bildet die Lagerung und Abdichtung für die Welle. Eine Optimierung der Abdichtung wird durch im Kunststoffmaterial integrierte O-Ringe erreicht.

Die FR-A-2 749 243 hat ein dichtendes Lagerelement gemäß dem Oberbegriff des Anspruchs 1.

Bei einer weiteren Antriebsvorrichtung (DE 197 10 859 A1) für einen Scheibenwischer mit einer in einem Gehäuse mit einem Gleitlager gelagerten Antriebswelle liegt im Bereich des Wellendurchtritts am Gehäuse ebenfalls ein Ringspalt (Axialspalt) vor, in welcher ein Dichtungselement angeordnet ist, das sowohl in radialer als auch in axialer Richtung wirkt. Zur Abdichtung eines Wellenabschnittes eines bestimmten Durchmessers in axialer Richtung ist das Dichtungselement mit im Abstand zueinander einstückig an diesem angeordneten, radial zur Welle weisenden Dichtlippen versehen. Bei dieser Dichtungsausbildung besteht die Gefahr, daß die Dichtlippen bei der Montage des Dichtungselementes wegen des langen axialen Schiebeweges relativ zur Welle beschädigt werden, so daß diese ihrer Dichtungsfunktion nicht mehr gerecht werden können.

Es ist Aufgabe der Erfindung, ein dichtendes Lagerelement für eine Antriebswelle nach dem Oberbegriff des Anspruchs 1 zu schaffen, das in Verbindung mit der Antriebswelle, insbesondere der Antriebswelle eines Scheibenwischers, eine Abdichtung in axialer Richtung auf einfache Weise sicherstellt.

Diese Aufgabe wird bei einem Lagerelement nach dem Oberbegriff des Anspruchs 1 durch dessen kennzeichnende Merkmale gelöst. Vorteilhafte Ausgestaltungen sind in den nachfolgenden Unteransprüchen beschrieben.

Die Erfindung betrifft ein dichtendes Lagerelement für eine Antriebswelle, die zwei Wellenabschnitte unterschiedlichen Durchmessers aufweist, wobei der Wellenabschnitt mit dem größeren Durchmesser antriebsseitig ausgebildet ist, das in bekannter Weise einen Lagerkörper mit wenigstens zwei radial zur Antriebswelle weisenden und in einem axialen Abstand zueinander angeordneten ringförmigen Dichtlippen unterschiedlichen Durchmessers zur dichtenden Anlage am jeweiligen Wellenabschnitt aufweist. Der Lagerkörper ist als Gleitlagerbuchse ausgebildet und liegt im wesentlichen über seine gesamte Länge an der Antriebswelle an und weist dabei zwei Bereiche unterschiedlichen Innendurchmessers auf, in denen jeweils im Abstand von einer durch diese gebildeten Stufe eine Dichtlippe angeformt ist.

Damit ist ein dichtendes Lagerelement gestaltet, das auf einfache Weise in Verbindung mit der Antriebswelle eine Abdichtung in axialer Richtung sicherstellt. Die Ausbildung des Lagerelementes bewirkt auch, daß bei der Montage des Lagerelementes an der Antriebswelle durch relatives Verschieben zueinander die antriebseitige Dichtlippe nicht belastet wird und auch bei einem langen Verschiebeweg nicht beschädigt oder gar zerstört werden kann. Überdies ist bei der Montage infolge geringerer Reibungskräfte beim Aufschieben des Lagerelementes auf die Antriebswelle der erforderliche Kraftaufwand erheblich reduziert.

Ist die Dichtlippe mit dem kleineren Innendurchmesser im antriebsferneren Bereich ihres Anordnungsraumes im Lagerkörper, vorzugsweise an dessen Ende, ausgebildet, so wird diese Dichtlippe infolge eines nur kurzen Verschiebeweges relativ zur Antriebswelle ebenfalls reduziert belastet, und die Gefahr einer Beschädigung der Dichtlippe ist weitestgehend minimiert.

Das Lagerelement kann als Dichtungselement in einem Gleitlager zur axialen Abdichtung eines durch eine Lagerbuchse begrenzten Ringspaltes zwischen einem Lagergehäuse und einer Antriebswelle mit den vorbeschriebenen Vorteilen angeordnet sein.

Es kann aber auch selbst als einstückiges Gleitlager ohne Lagergehäuse zur Anordnung in einem Scheiben- oder Blechdurchtritt ausgebildet sein, wozu es mit entsprechenden Befestigungsmitteln versehen ist, vorzugsweise mit einer am Umfang koaxial angeordneten Ringnut zur Festlegung am Rand der jeweiligen Durchtrittsöffnung. Mit dem einstückigen Gleitlager ist ein sehr kompaktes, wenig aufwendiges, wenig empfindliches und einfach zu montierendes Lagerelement mit den vorstehend beschriebenen prinzipiellen Vorteilen gegeben. Überdies wird durch die reduzierten Montagekräfte beim Einführen der Antriebswelle in ein in der Durchtrittsöffnung einer Scheibe oder eines Bleches vormontiertes Gleitlager die Gefahr des Herausdrückens aus seiner Halterung verringert.

Die Antriebswelle ist zwischen den Bereichen unterschiedlichen Durchmessers abgestuft, und vorteilhaft ist die Stufe angeschrägt. Dadurch ergeben sich ein begrenzter relativer Verschiebeweg und eine vorbestimmte Montageposition der Antriebswelle im Lagerelement.

Die Erfindung wird nachstehend anhand eines Ausführungsbeispieles erläutert.

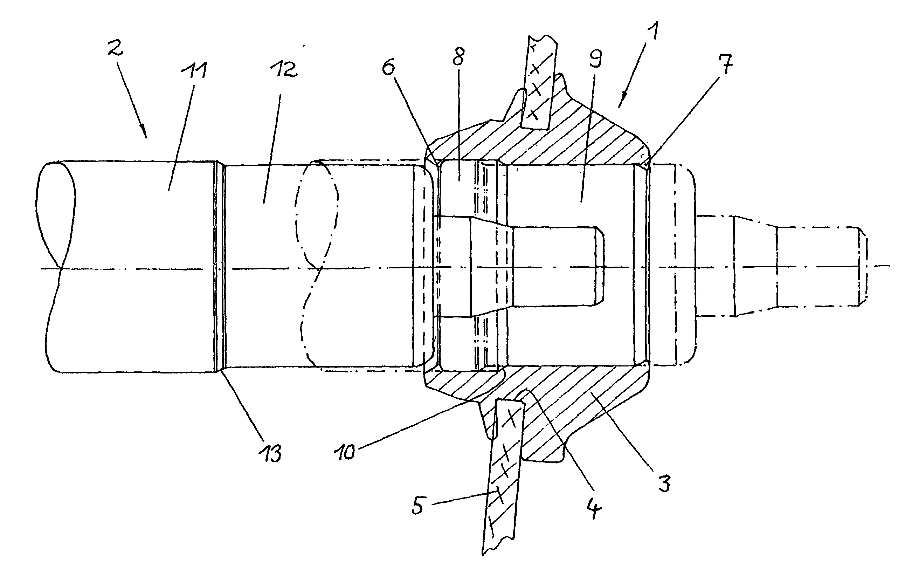

Die einzige Zeichnung zeigt ein dichtendes Lagerelement 1 für die Antriebswelle 2 eines Scheibenwischers (nicht dargestellt), die zugleich Abtriebswelle eines nicht dargestellten Wischermotors ist. Das Lagerelement 1 weist einen als Gleitlagerbuchse ausgebildeten Lagerkörper 3 auf, der mit einer umlaufenden Ringnut 4 als Befestigungsmittel zur dichten Anordnung an dem Durchtritt einer Heckscheibe 5 versehen ist. Im Innem des Lagerkörpers 3 sind zwei radial zur Antriebswelle 2 weisende und in einem axialen Abstand zueinander angeordnete ringförmige Dichtlippen 6 und 7 zur Anlage an der Antriebswelle, jeweils in Bereichen 8 und 9 unterschiedlichen Innendurchmessers des Lagerkörpers 3 ausgebildet, einstückig angeformt, und zwar jeweils an den entgegengesetzten Enden der beiden Bereiche 8 und 9. Die Dichtlippen 6 und 7 haben einen im wesentlichen gleichen dreieckförmigen Querschnitt, wobei die Dichtlippe 6 einen größeren Innendurchmesser als die Dichtlippe 7 hat, da sie im antriebseitigen Bereich 8 des Lagerkörpers 3 mit dem größeren Durchmesser angeordnet ist. Zwischen den Bereichen 8 und 9 ist eine abgeschrägte Stufe 10 ausgebildet. Die Antriebswelle 2 weist zwei Wellenabschnitte 11 und 12 unterschiedlichen Durchmessers auf, die bezüglich ihrer Durchmesser mit denen der Bereiche 8 und 9 korrespondieren und die ebenfalls durch eine abgeschrägte Stufe 13 voneinander getrennt sind.

Zur Montage der Antriebswelle 2 im Lagerkörper 3 wird diese in den am Durchtritt der Heckscheibe 5 vormontierten Lagerkörper 3 eingeschoben. Dabei passiert der Wellenabschnitt 12 mit dem kleineren Durchmesser den Bereich 8 mit dem größeren Durchmesser, wobei die Dichtlippe 6 mit dem größeren Innendurchmesser nicht oder nur unwesentlich elastisch verformt wird und das Einführen der Antriebswelle 2 unbeschwert erfolgen kann. Beim weiteren Einschieben gelangt die Antriebswelle 2 mit ihrem Wellenabschnitt 12 in den Bereich 9 des Lagerkörpers 3 mit gleichem, in einem vorgegebenen Toleranzbereich größeren Durchmesser, so daß das weitere Einschieben nicht behindert wird. Erst am Ende dieses Bereiches 9 gelangt der Wellenabschnitt 12 an die Dichtlippe 7. Diese und die im wesentlichen gleichzeitig durch den Wellenbereich 11 erreichte Dichtlippe 6 werden beim weiteren Verschieben der Antriebswelle 2 elastisch an diese und in den Lagerkörper 3 gedrückt und dichten diesen - in der beschriebenen Ausführung somit die gesamte Gleitlagerbuchse - gegenüber der Antriebswelle 2 elastisch ab. Der Verschiebeweg unter elastischer Anlage der beiden Dichtlippen 6 und 7 am jeweiligen Wellenabschnitt 11 und 12 ist gering und wird begrenzt durch die Stufen 10 und 13.

### BEZUGSZEICHENLISTE

- 1: Lagerelement
- 2: Antriebswelle
- 3: Lagerkörper
- 4: Ringnut
- 5: Heckscheibe
- 6: Dichtlippe
- 7: Dichtlippe
- 8: Bereich
- 9: Bereich
- 10: Stufe
- 11: Wellenabschnitt
- 12: Wellenabschnitt
- 13: Stufe

## Patentansprüche

1. Dichtendes Lagerelement für eine Antriebswelle, insbesondere die Antriebswelle eines Scheibenwischers in einem Fahrzeug, die zwei Wellenabschnitte unterschiedlichen Durchmessers aufweist und der Wellenabschnitt mit dem größeren Durchmesser antriebsseitig ausgebildet ist, mit einem Lagerkörper mit in einem axialen Abstand zueinander angeordneten ringförmigen Dichtlippen unterschiedlichen Innendurchmessers, wobei der Lagerkörper (3) als Gleitlagerbuchse ausgebildet ist und im wesentlichen über seine gesamte Länge an der Antriebswelle (2) anliegt und dabei zwei Bereiche (8, 9) unterschiedlichen Innendurchmessers zur Anlage an den Wellenabschnitten (11, 12) aufweist, und wobei in jedem dieser Bereiche (8, 9) im Abstand von einer durch diese gebildeten Stufe (10) eine Dichtlippe (6, 7) angeformt ist, **dadurch gekennzeichnet, daß** jede der Dichtlipper (6, 7) radial zur Antriebswelle weist zur dichtenden Anlage an dieser.

2. Lagerelement nach Anspruch 1, **dadurch gekennzeichnet, daß** die Dichtlippe (7) mit dem kleineren Durchmesser im antriebsfemen Bereich (9) des Lagerkörpers (3), vorzugsweise an dessen Ende ausgebildet ist.

3. Lagerelement nach Anspruch 1, **dadurch gekennzeichnet, daß** die Stufe (10) mit einer zwischen den Wellenabschnitten (11, 12) abgeschrägten Stufe (13) korrespondiert und ebenfalls abgeschrägt ist.

4. Lagerelement nach Anspruch 1, **dadurch gekennzeichnet, daß** der Querschnitt der Dichtlippen (6, 7) dreieckförmig und im wesentlichen gleich ist.

5. Lagerelement nach Anspruch 1 oder 2, **dadurch gekennzeichnet, daß** an der Außenseite des Lagerkörpers (3) Befestigungsmittel für einen Scheiben- oder Blechdurchtritt ausgebildet sind, vorzugsweise eine umlaufende Ringnut (4).

## Claims

1. Sealing bearing element for a drive shaft, in particular the drive shaft of a window wiper in a vehicle, the drive shaft having two shaft sections of different diameter and the shaft section with the larger diameter being formed on the drive side, having a bearing body with annular sealing lips of different inside diameter which are arranged at an axial distance from one another, the bearing body (3) being designed as a sliding bearing bushing and bearing essentially over its entire length against the drive shaft (2) and having two regions (8, 9) of different inside diameter for bearing against the shaft sections (11, 12), and a sealing lip (6, 7) being integrally formed in each of these regions (8, 9) at a distance from a step (10) formed by them, **characterized in that** each of the sealing lips (6, 7) points radially with respect to the drive shaft in order to bear in a sealing manner against the latter.

2. Bearing element according to Claim 1, **characterized in that** the sealing lip (7) having the smaller diameter is formed in the region (9) of the bearing body (3) which is remote from the drive, preferably at the end of said bearing body.

3. Bearing element according to Claim 1, **characterized in that** the step (10) corresponds to a step (13) bevelled between the shaft sections (11, 12), and is likewise bevelled.

4. Bearing element according to Claim 1, **characterized in that** the cross section of the sealing lips (6, 7) is triangular and essentially identical.

5. Bearing element according to Claim 1 or 2, **characterized in that** fastening means for a window or plate passage, preferably an encircling annular groove (4), are formed on the outside of the bearing body (3).

## Revendications

1. Elément de palier d'étanchéité pour un arbre d'entraînement, notamment l'arbre d'entraînement d'un essuie-glace dans un véhicule, qui présente deux portions d'arbre de diamètres différents, et où la portion d'arbre de plus grand diamètre est réalisée du côté de l'entraînement, avec un corps de palier avec des lèvres d'étanchéité de forme annulaire disposées à distance axiale les unes des autres, de diamètres intérieurs différents, le corps de palier (3) étant réalisé sous forme de douille de palier lisse et s'appliquant essentiellement sur toute sa longueur contre l'arbre d'entraînement (2) et présentant en l'occurrence deux régions (8, 9) de diamètres intérieurs différents destinées à venir en appui contre les portions d'arbre (11, 12) et une lèvre d'étanchéité (6, 7) étant formée dans chacune de ces régions (8, 9) à distance d'un étage (10) formé par celles-ci, **caractérisé en ce que** chacune des lèvres d'étanchéité (6, 7) est tournée radialement vers l'arbre d'entraînement afin de venir en appui hermétiquement contre celui-ci.

2. Elément de palier selon la revendication 1, **caractérisé en ce que** la lèvre d'étanchéité (7) avec le plus petit diamètre est réalisée dans la région (9) du corps de palier (3) éloignée de l'entraînement, de préférence à son extrémité.

3. Elément de palier selon la revendication 1, **caractérisé en ce que** l'étage (10) correspond à un étage (13) biseauté entre les portions d'arbre (11, 12) et est également biseauté.

4. Elément de palier selon la revendication 1, **caractérisé en ce que** la section transversale des lèvres d'étanchéité (6, 7) est triangulaire et essentiellement identique.

5. Elément de palier selon la revendication 1 ou 2, **caractérisé en ce que** des moyens de fixation pour un passage de disque ou de tôle sont réalisés du côté extérieur du corps de palier (3), de préférence une rainure annulaire périphérique (4).
